# EUROPEAN PATENT SPECIFICATION

(11) **EP 1 161 841 B1**
(45) Date of publication and mention of the grant of the patent: **30.03.2005**
(21) Application number: 00962867.8
(22) Date of filing: 27.09.2000
(51) Int. Cl.: H04N 7/52, G11B 20/10

(54) **Demultiplexing and buffering of bitstreams for a DVD audio decoder**
Demultiplexen und Puffern von Bitströmen für einen DVD Audiodekoder
Démultiplexage et stockage tampon de trains de données binaires pour un décodeur audio DVD.

(30) Priority: 30.09.1999 JP 27915099
(43) Date of publication of application: 12.12.2001
(73) Proprietor: MATSUSHITA ELECTRIC INDUSTRIAL CO., LTD., Kadoma-shi, Osaka 571-8501 (JP)
(72) Inventor: LIM, Sau, Tsien, Burnaby, British Columbia V3N 4R3 (CA); MEIARASHI, Makoto, Ishikari-shi, Hokkai-do 061-3205 (JP); HOASHI, Katsumi, Moriguchi-shi, Osaka 570-0032 (JP); YAMAGUCHI, Ryoji, Katano-shi, Osaka 576-0021 (JP); MONDA, Ken, Takatsuki-shi, Osaka 569-1022 (JP)
(74) Representative: Eisenführ, Günther, Dipl.-Ing.
(86) International application number: PCT/JP2000/006643
(87) International publication number: WO 2001/024533

(56) References cited:
- EP-A- 0 795 870
- EP-A- 0 797 197
- EP-A- 0 918 331
- EP-A- 0 940 815

## Description

### TECHNICAL FIELD

This invention relates to implementation of a data buffering and demultiplexing apparatus for a DVD-Audio decoder system.

### BACKGROUND ART

"DVD Specifications for Read-Only Disc Part 4 Audio Specifications Version 0.9", referred to as "DVD Audio specifications" hereinafter, specifies a new type of data stream, an audio still video unit stream. An audio still video unit stream is not multiplexed with an audio program stream but stored as separate object on its own. This is different from "DVD Specifications for Read-Only Part 3 Video Specifications Version 1.1", referred to as "DVD Video specifications" hereinafter, where all elementary data streams such as audio, video and sub-picture are multiplexed into one logical program stream. An audio still video object (ASVOB) is formed from three elementary stream objects, namely, highlight information, 1 to 3 sub-pictures and still video. An alternate form exists where an audio still video is formed only by a still video object. A collection of audio still video objects makes up an audio still video unit (ASVU). A limited number of audio still video objects can exist in one audio still video unit. According to DVD Audio Specifications, one audio still video unit is limited to 99 audio still video objects, and the size is limited to 2 Megabytes. A collection of audio still video units makes up an audio still video unit stream (ASVUS).

In the DVD Audio specifications, a DVD audio decoder must buffer a whole audio still video unit in an audio still video unit buffer. Two demultiplexers capable of decoding program streams are needed. One of them demultiplexes the audio still video unit stream from an audio still video unit buffer, and the other demultiplexes the audio program stream from a DVD Audio disc. In addition, DVD Audio specifications also stipulate that the audio still video objects in an audio still video unit can be accessed in any unknown order until the audio still video is to be presently selected. Thus, the starting location of each audio still video in an audio still video unit needs to be known.

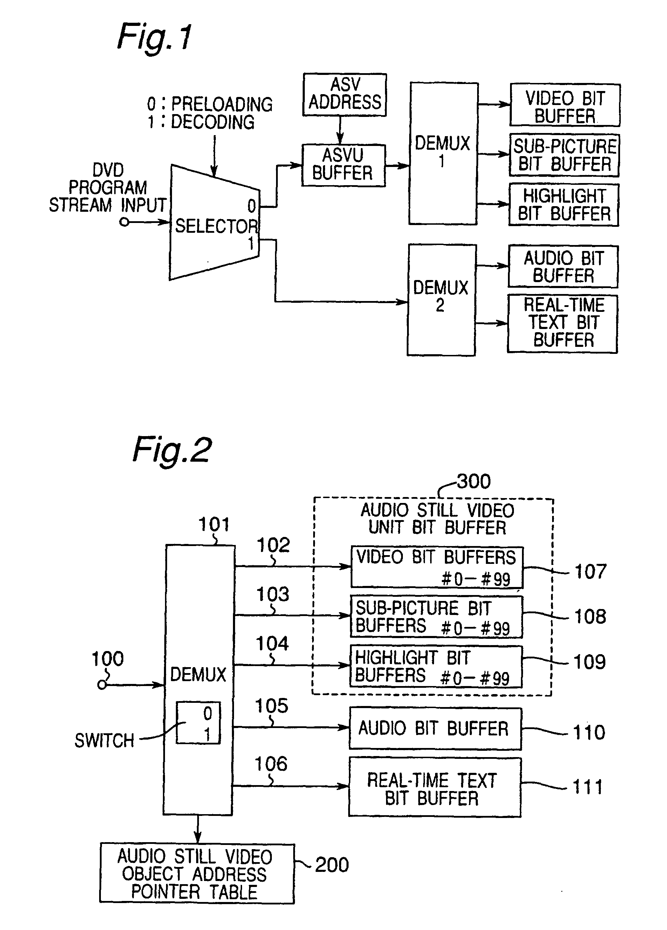

Figure 1 shows an example of an implementation based on the decoder model specified in the DVD Audio specifications. When input data is a type of audio still video unit stream, the input data is directed by a selector to be stored (or buffered) into an audio still video unit buffer (ASVU Buffer) controlled from a pre-loading terminal control valve 0. When the buffering of the data is completed, the selector is switched back to a decoding position by a control value 1. When input data is an audio program stream, the data is directed to an audio program stream demultiplexer, DEMUX2 and then the demultiplexed data such as an audio elementary stream is written into an audio bit buffer and other buffers such as a real time text bit buffer. At the same time, the data from the audio still video unit buffer (ASVU Buffer) is read into another demultiplexer, DEMUX1, which demultiplexes the data to be written into video, sub-picture and highlight bit buffers. An audio still video address (ASV Address) table stores the start and/or end address of each audio still video object in the audio still video unit buffer. These addresses are used to select the correct audio still video object to be sent to DEMUX1.

Looking at Figure 1, it is obvious that the incoming data stream may comprise two independent multiplexed program streams, namely, an audio still video unit stream (ASVUS) and an audio program stream. From a DVD Audio decoder point of view, this is different from that of a DVD Video decoder. Therefore, two program stream demultiplexers are needed for both the audio still video units and the audio program. This solution is more costly, because the presently existing DVD Video decoder system only requires one demultiplexer. Alternatively, a single high speed demultiplexer that could demultiplex two streams simultaneously is needed. This would require a new demultiplexer that is capable of demultiplexing at a rate two times that of a conventional demultiplexer. Again, this is more costly than using a slower speed demultiplexer that already exists in the DVD Video decoder.

This invention discloses a method that buffers the demultiplexed audio still video unit stream after it has been demultiplexed by a program stream demultiplexer similar to that used in the current DVD Video decoder system. This means that the invention can be implemented by effectively using only one program stream demultiplexer.

In addition, the size of the bit buffers in the system for storing the demultiplexed elementary stream can be reduced. This saving comes from the fact that the size of the audio still video unit after it has been demultiplexed is smaller in size than the original program stream. Another saving comes from the fact that a separate video bit buffer, sub-picture bit buffer and highlight bit buffer are not required anymore. The audio still video unit bit buffer which stores the demultiplexed elementary audio still video data is already in the bit buffer format. This also improves the time it takes to access a specific audio still video object. It is no longer necessary to send the audio still video object to a demultiplexer first.

In a conventional system, such as a DVD Video demultiplexing of audio/video stream, the program stream is demultiplexed only when it is needed. By performing demultiplexing early during pre-loading of the audio still video unit stream into the audio still video unit bit buffer, the system can detect potential bit stream syntax errors in advance, before the data is decoded.

EP0940815 discloses a storage medium for storing catalogue information and a catalogue information playback apparatus and method. By the method, catalogue information formed of a still picture and additional information together with audio data are recorded on a storage medium (such as a DVD), which is an optical record storage medium, and the catalogue information is played back during playback of audio, to thereby provide various information on the audio. Also, the apparatus includes a buffer memory for catalogue playback maintaining the predetermined standard and compatibility, and capable of real-time reading during playback of audio, and automatically playing back the catalogue content, corresponding to the playback state of the audio data, when there is no additional selection of a user.

EP0918331 discloses a digital signal recording disc having a first area storing an audio title set. The audio title set has data representing audio information and data representing a still picture. The audio title set is void of a pack of data for playback control. The first area also stores information for managing the audio title set. The digital signal recording disc is void of a second area storing a video title set and information for managing the video title set.

EP0795870 discloses an information record medium having a record track to be reproduced by an information reproducing apparatus . The information reproducing apparatus is provided with a read device, reproduces audio information while relatively moving the read device along the record track recorded with at least the audio information by a predetermined unit of audio frame and by a unit of frame group consisting of consecutive audio frames in a predetermined number. A plurality of audio packets are arranged along the record track, in each of which audio information pieces constructing the audio information sampled by a predetermined sampling frequency and audio control information for controlling a reproduction and an access of the audio information pieces are respectively recorded.

EP0797197 discloses that audio data at the top of each packet is always set at the top of sample data and packets which can be treated as units, thus facilitating a timing process, sequential processing and the like for processing audio data. A plurality of samples consisting of variable length data are arranged in a packet of predetermined bytes. In this case, other samples than the first sample in the plurality of samples are sequentially arranged with the top of the first sample being positioned at a predetermined position of the packet, the total byte length of the sample data is equal to or smaller than a maximum byte length of the packet; and when a byte length of the packet is less than the maximum byte length, invalid data of a stuffing byte or a padding byte is inserted in a remaining portion.

### DISCLOSURE OF INVENTION

For the purpose of solving the above-described problems, the bit stream buffering and demultiplexing architecture according to the present invention was designed:

In order to keep the cost of the DVD Audio decoder low by not adding an additional demultiplexer in the system, a buffering method which demultiplexes the audio still video unit stream during the pre-loading to the audio still video unit bit buffer is invented. In order to reduce the amount of bit-stream buffers used in a decoder system, a means for bit buffer memory sharing is invented. In order to help the decoder system better manages bit-stream errors, error checking the program stream syntax during demultiplexing allow the decoder to detect stream errors early, before the DVD Audio decoder needs to present any data to the user. In order to speed up access time in accessing a particular audio still video object from the audio still video unit bit buffer, the demultiplexed audio still video unit stream is stored in the audio still video unit bit buffer. The address locations of each object in an audio still video unit are easily available to speed up accesses as well.

According to the present invention, a bit stream buffering and demultiplexing apparatus for a DVD Audio decoding system is proposed as claimed in claim 1. A corresponding method is claimed in claim 7.

Further, another aspect of the present invention provides a DVD Audio decoding system as claimed in claim 8.

The DVD Audio decoder system reads in a bit stream from the DVD Audio disc and sends it to the demultiplexer. For the DVD Audio decoder, the audio still video unit stream is read from the disc first and passes to the demultiplexer. The demultiplexer strips off the program stream layer and stores elementary video, highlight information and sub-picture streams in the audio still video unit bit buffer. This is done during the audio still video unit pre-loading specified in the DVD Audio specifications. The demultiplexer also checks the structure of the audio still video program stream to make sure it conforms to the structure outlined in the DVD Audio specifications. Bit stream errors are reported to the system. The demultiplexer also keeps track of the location of each audio still video objects demultiplexed. These address locations are buffered to allow random access to specific audio still video object during audio program decoding. After the decoder completes the pre-loading process, audio program stream is read from the DVD Audio disc. The same demultiplexer then demultiplexes the audio program stream that contains audio and other optional streams such as real-time text. Demultiplexed elementary data are stored in appropriate bit buffers.

From the audio bit buffers, the audio decoder reads the audio elementary stream, decodes and presents the data. At the same time, using the audio still video objects addresses stored in the pointer table, the video, sub-picture and highlight information decoders read in the appropriate audio still video object, decode and present the data to the user. The presentation order of the audio still video objects depends on presentation information stored in the DVD Audio disc or from the interactive controls of the DVD Audio decoder system user.

### BRIEF DESCRIPTION OF DRAWINGS

These and other objects and features of the present invention will be readily understood from the following detailed description taken in conjunction with preferred embodiments thereof with reference to the accompanying drawings, in which like parts are designated by like reference numerals and in which:
Figure 1 is a prior-art of the current invention;
Figure 2 is an example embodiment of the invented DVD Audio stream buffering and demultiplexing system;
Figure 3 is an example configuration of the audio still video object address pointer table and audio still video unit bit buffer mapping of the embodiment of Figure 2; and
Figure 4 is another example configuration of the audio still video object address pointer table and audio still video unit bit buffer mapping of the embodiment of Figure 2.

### Best Mode for Carrying Out the Invention

Before the description proceeds, it is to be noted that, since the basic structures of the preferred embodiments are in common, like parts are designated by the same reference numerals throughout the accompanying drawings.

An example of an embodiment of the present invention is described with reference to Figure 2. In Figure 2, a program stream comes in from a program stream input terminal 100 to a demultiplexer, DEMUX 101. The input stream is multiplexed according to ISO13818-1 MPEG-2 Program Stream Standard as well as to DVD Audio and Video specifications. DEMUX 101 demultiplexes the program stream into elementary data streams. For the current embodiment of the present invention, but not limited by this, DEMUX 101 supports demultiplexing into the following elementary streams: video, sub-picture, highlight information, audio and other data such as real-time text. The DEMUX 101 demultiplexes the input stream and then the demultiplexed elementary data streams are written into video bit buffers 107, sub-picture bit buffers 108, highlight bit buffers 109, audio bit buffer 110 and other buffers 111 such as real-time text bit buffer.

In this embodiment, video buffers are logical buffers that store all the video objects of all the audio still video objects contained in an audio still video unit. The same is said for sub-picture bit buffers and highlight bit buffers. These 3 groups of bit buffers make up the audio still video unit bit buffer 300. More details on the mapping of this buffer shall be stated later.

There are two types of multiplexed program streams input from the input terminal 100 to DEMUX 101. An audio still video unit stream is a multiplex of video, sub-picture and highlight data. An audio program stream is a multiplex of audio and real-time text data. Accordingly, DEMUX 101 may include a switch means for switching the writing of the demultiplexed program streams between the audio still video unit bit buffer (300) and the bit stream buffers (110, 111) in accordance with the types of the input program streams. A selector as shown in Figure 1 may be used as a switch means. Thus, when the input data is an audio still video unit stream, the demultiplexed data output of DEMUX 101 is directed by the selector to be stored in the audio still video unit bit buffer (300). When the input data is an audio program stream, the demultiplexed data output of DEMUX 101 is directed to the audio and real-time text bit buffers (110, 111).

When the system is performing audio still video pre-loading, audio still video unit stream is inputted to DEMUX 101. DEMUX 101 writes the demultiplexed data via buses 102, 103 and 104 into the respective bit buffers 107, 108 and 109 in the audio still video unit buffer 300. This unit buffer is similar to the ASVU buffer stated in the prior art shown in Fig. 1 except that the elementary data streams are stored instead. During the demultiplexing, of an audio still video unit stream, DEMUX 101 also calculates the start and end location of each video, sub-picture and highlight elementary streams and stores these addresses in an audio still video object address pointer table 200. This table is essential for random accessing of audio still video objects during the decoding phase (or mode) of the decoder.

During audio still video unit demultiplexing, DEMUX can perform various types of stream integrity checks such as program stream syntax check or audio still video stream structure check. The number of audio still video objects can be counted and then confirmed with the number stored elsewhere in the disc. The order of video, sub-picture and highlight in an audio still video object can also be double-checked to confirm the validity of the stream. The size of the audio still video unit can also be confirmed against the limit set by the specification. All this information can provide a good indication to the decoder as to the data integrity of the disc.

When the has system completed audio still video pre-loading, the system inputs audio the program stream to start audio decoding. During this time, DEMUX 101 demultiplexes the audio program stream into audio and real-time text elementary streams, and stores the elementary streams' data into their respective bit buffers 110 and 111 via buses 105 and 106. At this time, the video, sub-picture, highlight, audio and real-time text elementary streams are read from their respective bit buffers simultaneously and sent to their respective decoder for decoding. The video, sub-picture and highlight elementary streams are accessed depending on which audio still video object within the audio still video unit has been selected for decoding. This information may be unknown until 0.4 seconds before the audio still video object is to be presented, according to the DVD Audio Specifications. The audio still video object address pointer table 200 stores the information needed by the decoder to read the correct data from the audio still video unit bit buffer 300.

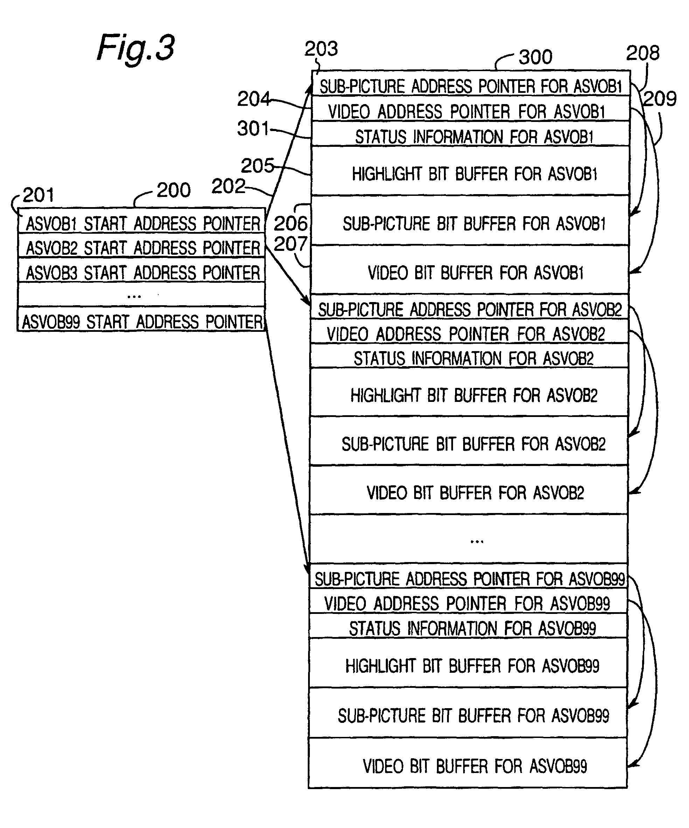

Figure 3 shows an embodiment of the audio still video object address pointer table 200 and the audio still video unit bit buffer 300. In this embodiment, the DEMUX stores the start address pointer of each audio still video object (ASVOB 1-99) it encounters when demultiplexing the audio still video unit stream as in the audio still video object address pointer table 200. Each of the start addresses in turn points to a start position of the respective audio still video object stored in the audio still video unit bit buffer 300. The beginning portion of each audio still video object in the audio still video bit buffer further contains pointer addresses that point to the start of the object in the sub-picture bit buffer and the video bit buffer for that particular audio still video object. The highlight bit buffer does not need a pointer address as it immediately follows the video pointer addresses and status information data. It is noted here that the audio still video address pointer table (200) may store start and/or end address pointers of all or sub group of elementary streams of an audio still video unit.

Referring to Figure 3, as to an audio still video object 1 (ASVOB1), an address pointer 201 in the address pointer table 200 points to the beginning of the audio still video object 1 (ASVOB1) in the audio still video bit buffer 300. An arrow line 202 indicates this pointer in Figure 3. The sub-picture address pointer 203 for ASVOB1 in turn points to a start location of a sub-picture bit buffer 206 for ASVOB1, and an arrow line 208 shows this pointer. A video address pointer 204 for ASVOB1 immediately after the sub-picture address pointer 203 points to a start location of a video bit buffer 207 for ASVOB1, and an arrow line 209 shows this pointer. Immediately after the video address pointer 204 for ASVOB1, extra status information of ASVOB1 is stored indicative of such as whether the current audio still video object contains valid highlight data, or syntax error information. Numeral 301 shows the status information for ASVOB1. A highlight bit buffer 205 for ASVOB1 follows immediately after the status information 301 for ASVOB1. In cases when no highlight data or sub-picture exist, setting sub-picture pointer address to 0 will indicate that only a video bit buffer exists in the bit stream.

For most implementations, the audio still video address pointer table would be implemented using an internal static random access memory. For the audio still video unit bit buffer, due to its larger size, it is usually implemented as part of a system memory in an external dynamic random access memory. This particular embodiment for the audio still video address pointer table allows part of the address pointer. to be stored in the cheaper dynamic random access memory typically used for a audio still video unit bit buffer. The trade off for such system would be longer time to access the addresses to the audio still video objects.

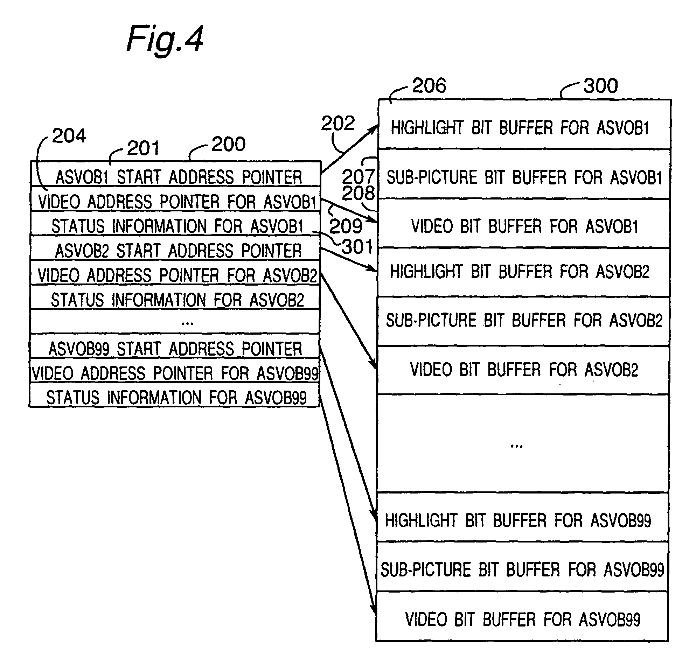

Figure 4 shows an alternative embodiment of the audio still video object address pointer table 200 and audio still video unit bit buffer 300, related to the current invention. In this embodiment, the audio still video object address pointer table contains the address pointers needed to access each audio still video objects in the audio still video unit bit buffer. The table also contains extra status information of each audio still video object to store syntax error information and extra status data.

Unlike in the previous embodiment in Figure 3, all pointer addresses to access the audio still video objects are stored in the pointer table 200. This embodiment has an advantage of faster access to an audio still video object start address, with the tradeoff of a larger pointer table. The audio still video object start address points to the start address of the specific audio still video object in the audio still video unit bit buffer. This also points to the highlight bit buffer of the specified audio still video object (ASVOB). The video address pointer points to the specific video bit buffer of the specified audio still video object in the audio still video bit buffer. The start address of each sub-picture bit buffer is calculated indirectly from the audio still video object address pointer.

In this embodiment, the size of the highlight bit buffer is limited to 704 bytes. Accordingly, the start address of sub-picture bit buffer is 704 bytes offset from the start of highlight bit buffer. In the case when no valid highlight information exists in the bit buffer, the status information field for the specific audio still video object will indicate such a condition and the video address pointer will have a value equal to the highlight bit buffer start address offset by 704 bytes.

The decoder uses the address information stored in the audio still video address pointer table and/or the audio still video unit bit buffer to access the correct audio still video object bit buffers quickly. This is very important for implementing fast random access functions for audio still videos.

Although the present invention has been described in connection with the preferred embodiments thereof with reference to the accompanying drawings, it is to be noted that various changes and modifications will be apparent to those skilled in the art.

### INDUSTRIAL APPLICABILITY

The effect of this invention is a cost efficient implementation of a bit stream buffering and demultiplexing system for DVD Audio decoder system. This is due to the use of only one demultiplexer. Storing of audio still video unit in an elementary form also have the advantages of reducing the size of bit buffer memories and speeding up access to the audio still video object data.

## Claims

1. A bit stream buffering and demultiplexing apparatus for a DVD Audio decoding system comprising:
a demultiplexer (101) for demultiplexing a multiplexed coded program stream comprising an audio still video unit stream and an audio program stream to respective elementary streams;
an audio still video unit bit buffer (300) for storing a demultiplexed audio stilt video unit from said demultiplexer;
an audio still video object address pointer table (200) storing address locations of demultiplexed audio still video objects in said audio still video unit bit buffer; and
an audio bit buffer (110) for storing demultiplexed audio program stream data from said demultiplexer;
wherein the demultiplexer (101) includes means for demultiplexing the audio still video unit stream during an audio still video pre-loading phase, prior to a decoding phase of simultaneous decoding of the data stored in both said audio still video unit bit buffer and said audio bit buffer, to the audio stilt video unit bit buffer (300),
**characterized in that** said audio still video object address pointer table (200) further stores status information of the demultiplexed audio still video objects.

2. A bit stream buffering and demultiplexing apparatus according to claim 1, wherein said demultiplexer (101) comprises:
a means for demultiplexing the multiplexed coded program stream to respective elementary streams, and
a means for switching of writing to said audio still video unit bit buffer (300) from said bit stream, buffers (110) said switching occurring whenever the input bitstream is an audio still video unit stream.

3. A bit stream buffering and demultiplexing apparatus according to claim 1, wherein said audio still video unit bit buffer (300) comprises: a means for storing elementary streams of audio still video, and a means for storing start address pointers of all or sub group of elementary streams of an audio still video unit.

4. A bit stream buffering and demultiplexing apparatus according to claim 3, wherein said audio still video unit bit buffer (300) further comprises a means for storing status information relating to all or sub group of an audio still video unit.

5. A bit stream buffering and demultiplexing apparatus according to claim 1 , wherein said audio still video address pointer table (200) comprises: a means for storing start and/or end address pointers of all or sub group of elementary streams of an audio still video unit, and a means for storing status information relating to all or sub group of an audio still video unit.

6. A bit stream buffering and demultiplexing apparatus according to claim 5 wherein said status information storing means comprises: a means for storing syntax error information, and a means for storing other information related to the audio still video unit,

7. A bit stream buffering and demultiplexing method for a DVD Audio decoding system comprising the steps of:
demultiplexing a multiplexed coded program stream comprising an audio still video unit stream and an audio program stream to respective elementary streams,
storing a demultiplexed audio still video unit,
storing address locations of demultiplexed audio still video objects in said audio still video unit bit buffer in an audio still video object address pointer table (200); storing demultiplexed audio program stream data,
demultiplexing the audio still video unit stream during an audio still video pre-loading phase, prior to a decoding phase of simultaneous decoding of the data stored in both said audio still video unit bit buffer and said audio bit buffer,
**characterized in that** status information of the demultiplexed, audio still video objects are further stored in said audio still video object address pointer table (200).

8. A DVD Audio decoding system having a bit stream buffering and demultiplexing apparatus as claimed in claim 1, wherein
said demultiplexer (101) is the only one demultiplexer in said apparatus and generates said audio still video object address pointer table indicating an access address for each audio still video object, to demultiplex both said audio program stream and audio still video program stream,
said audio still video unit bit buffer (300) comprising means for storing demultiplexed audio still video data in an elementary format.

## Patentansprüche

1. Bitstrom-Puffer- und -Demultiplex-Vorrichtung für ein DVD-Audiodekodiersystem mit:
einem Demultiplexer (101) zum Demultiplexen eines gemultiplexten kodierten Programmstromes mit einem Audio-Still-Video-Einheits-Strom und einem Audio-Programmstrom in jeweilige elementare Ströme;
einem Audio-Still-Video-Einheits-Bitpuffer (300) zum Speichern einer gedemultiplexten Audio-Still-Video-Einheit aus dem Demultiplexer;
einer Audio-Still-Video-Objekt-Adress-Zeigertabelle (200), die Adresspositionen von gedemultiplexten Audio-Still-Video-Objekten in dem Audio-Still-Video-Einheits-Bitpuffer speichert; und
einem Audio-Bitpuffer (110) zum Speichern gedemultiplexter Audio-Programmstromdaten aus dem Demultiplexer;
wobei der Demultiplexer (101) Mittel umfasst zum Demultiplexen des Audio-Still-Video-Einheits-Stromes während einer Audio-Still-Video-Vorladungsphase, vor einer Dekodierphase des gleichzeitigen Dekodierens der Daten, die in dem Audio-Still-Video-Einheits-Bitpuffer und dem Audio-Bitpuffer gespeichert sind, in den Audio-Still-Video-Einheits-Bitpuffer (300),
**dadurch gekennzeichnet, dass** die Audio-Still-Video-Objekt-Adress-Zeigertabelle (200) ferner Statusinformationen der gedemultiplexten Audio-Still-Video-Objekte speichert.

2. Bitstrom-Puffer- und -Demultiplex-Vorrichtung gemäß Anspruch 1, wobei der Demultiplexer (101) umfasst:
Mittel zum Demultiplexen des gemultiplexten kodierten Programmstromes in jeweilige elementare Ströme, und
Mittel zum Umschalten des Schreibens in den Audio-Still-Video-Einheits-Bitpuffer (300) von den Bitstrompuffern (101), wobei das Schalten stattfindet, wann immer der Eingabebitstrom ein Audio-Still-Video-Einheits-Strom ist.

3. Bitstrom-Puffer- und -Demultiplex-Vorrichtung gemäß Anspruch 1, wobei der Audio-Still-Video-Einheits-Bitpuffer (300) umfasst:
Mittel zum Speichern der elementaren Ströme von Audio-Still-Video, und
Mittel zum Speichern von Startadress-Zeigern von allen oder einer Untergruppe der elementaren Ströme einer Audio-Still-Video-Einheit.

4. Bitstrom-Puffer- und -Demultiplex-Vorrichtung gemäß Anspruch 3, wobei der Audio-Still-Video-Einheits-Bitpuffer (300) ferner ein Mittel zum Speichern von Statusinformationen bezüglich aller oder einer Untergruppe einer Audio-Still-Video-Einheit umfasst.

5. Bitstrom-Puffer- und -Demultiplex-Vorrichtung gemäß Anspruch 1, wobei die Audio-Still-Video-Adress-Zeigertabelle (200) umfasst:
Mittel zum Speichern von Start- und/oder Endadress-Zeigern von allen oder einer Untergruppe von elementaren Strömen einer Audio-Still-Video-Einheit, und Mittel zum Speichern von Statusinformationen bezüglich aller oder einer Untergruppe einer Audio-Still-Video-Einheit.

6. Bitstrom-Puffer- und -Demultiplex-Vorrichtung gemäß Anspruch 5, wobei das Statusinformationsspeicherungsmittel umfasst:
Mittel zum Speichern von Syntaxfehlerinformationen, und
Mittel zum Speichern anderer Informationen mit Bezug auf die Audio-Still-Video-Einheit.

7. Bitstrom-Puffer- und -Demultiplex-Verfahren für ein DVD-Audiodekodiersystem mit den Schritten:
Demultiplexen eines gemultiplexten kodierten Programmstromes mit einem Audio-Still-Video-Einheits-Strom und einem Audio-Programmstrom in jeweilige elementare Ströme,
Speichern einer gedemultiplexten Audio-Still-Video-Einheit,
Speichern von Adresspositionen von gedemultiplexten . Audio-Still-Video-Objekten in dem Audio-Still-Video-Einheits-Bitpuffer in einer Audio-Still-Video-Objekt-Adress-Zeigertabelle (200);
Speichern von gedemultiplexten Audio-Programmstromdaten,
Demultiplexen des Audio-Still-Video-Einheits-Stromes während einer Audio-Still-Video-Vorladungsphase, vor einer Dekodierphase des gleichzeitigen Dekodierens der Daten, die in dem Audio-Still-Video-Einheits-Bitpuffer und dem Audio-Bitpuffer gespeichert sind,
**dadurch gekennzeichnet, dass** Statusinformationen der gedemultiplexten Audio-Still-Video-Objekte ferner in der Audio-Still-Video-Objekt-Adress-Zeigertabelle (200) gespeichert werden.

8. DVD-Audiodekodiersystem mit einer Bitstrom-Puffer- und -Demultiplex-Vorrichtung wie in Anspruch 1 beansprucht,
wobei der Demultiplexer (101) der einzige Demultiplexer in der Vorrichtung ist und die Audio-Still-Video-Objekt-Adress-Zeigertabelle erzeugt, die eine Zugangsadresse für jedes Audio-Still-Video-Objekt anzeigt, zum Demultiplexen von Audio-Programmstrom und Audio-Still-Video-Programmstrom,
wobei der Audio-Still-Video-Einheits-Bitpuffer (300) Mittel umfasst zum Speichern der gedemultiplexten Audio-Still-Video-Daten in einem elementaren Format.

## Revendications

1. Dispositif tampon de train de données binaires et de démultiplexage pour un système de décodage audio de DVD comprenant :
un démultiplexeur (101) pour le démultiplexage d'un train de programme multiplexé codé comprenant un train d'unité audio vidéo et un train de programme audio vers les trains élémentaires respectifs ;
un tampon de données binaires (300) pour stocker une unité audio vidéo démultiplexée depuis ledit démultiplexeur ;
un tableau indicateur d'adresses d'objet audio vidéo (200) stockant les emplacements d'adresses des objets audio vidéo démultiplexés dans ledit tampon de données binaires de l'unité audio vidéo ; et
un tampon de données binaires audio (110) pour stocker les données du train de programme audio démultiplexé depuis ledit démultiplexeur ;
dans lequel le démultiplexeur (101) comprend un moyen pour démultiplexer le train de l'unité audio vidéo pendant une phase de pré chargement audio vidéo, avant une phase de décodage du décodage simultané des données stockées à la fois dans ledit tampon de données binaires d'une unité audio vidéo et dans ledit tampon de données binaires audio, à partir du tampon de données binaires (300) de l'unité audio vidéo,
**caractérisé en ce que** ledit tableau indicateur d'adresse d'objet audio vidéo (200) stocke en outre l'information d'état des objets audio vidéo démultiplexés.

2. Dispositif tampon de train de données binaires et de démultiplexage démultiplexeur comprend :
un moyen pour démultiplexer le train de programme multiplexé codé en trains élémentaires respectifs, et
un moyen pour commuter ou écrire vers ledit tampon de données binaires (300) d'une unité audio vidéo à partir desdits tampons de train de données (110), ladite commutation survenant lorsque l'entrée de train de données binaires est un train d'unités audio vidéo.

3. Dispositif tampon de train de données binaires et de démultiplexage selon la revendication 1, dans lequel ledit tampon de données binaires (300) d'une unité audio vidéo comprend un moyen pour stocker les trains élémentaires audio vidéo, et un moyen pour stocker les indicateurs d'adresse de démarrage de tous les groupes ou sous groupes des trains élémentaires d'une unité audio vidéo.

4. Dispositif tampon de train de données binaires et de démultiplexage selon la revendication 3, dans lequel ledit tampon de données binaires (300) d'une unité audio vidéo comprend en outre un moyen pour stocker l'information d'état se rapportant à tous les groupes ou sous groupes d'une unité audio vidéo.

5. Dispositif tampon de train de données binaires et de démultiplexage selon la revendication 1, dans lequel ledit tableau indicateur (200) d'adresse audio vidéo comprend un moyen pour stocker les indicateurs d'adresse de démarrage et/ou de fin d'une unité audio vidéo, et un moyen pour stocker l'information d'état se rapportant à tous les groupes ou les sous groupes d'une unité audio vidéo.

6. Dispositif tampon de train de données binaires et de démultiplexage selon la revendication 5, dans lequel ledit moyen de stockage d'information d'état comprend un moyen pour stocker l'information d'erreur de syntaxe, et un moyen pour stocker une autre information se rapportant à l'unité audio vidéo.

7. Procédé tampon de train de données binaires et de démultiplexage pour un système de décodage de DVD audio comprenant les étapes de :
démultiplexage d'un train de programme multiplexé codé comprenant un train d'unité audio vidéo et un train de programme audio vers les trains élémentaires respectifs,
stockage d'une unité démultiplexée audio vidéo,
stockage des emplacements d'adresse d'objets audio vidéo démultiplexés dans ledit tampon de données binaires de l'unité audio vidéo dans un tableau indicateur d'adresse (200) d'objet audio vidéo ;
stockage des données de train de programme audio démultiplexé,
démultiplexage du train d'unité audio vidéo pendant une phase de pré chargement audio vidéo avant une phase de décodage d'un décodage simultané des données stockées à la fois dans ledit tampon de données binaires de l'unité audio vidéo et dans ledit tampon de données binaires audio,
**caractérisé en ce que** l'information d'état des objets audio vidéo sont en outre stockés dans ledit tableau indicateur d'adresse (200) d'objet audio vidéo.

8. Système de décodage DVD audio ayant un dispositif de tampon de trains de données binaires et de démultiplexage selon la revendication 1, dans lequel
ledit démultiplexeur (101) est le seul démultiplexeur dans ledit dispositif et génère ledit tableau indicateur d'adresse d'objet audio vidéo qui indique une adresse d'accès pour chaque objet audio vidéo, pour démultiplexer à la fois ledit train de programme audio et ledit train de programme vidéo,
ledit tampon de données binaires (300) de l'unité audio vidéo comprenant un moyen pour stocker les données audio vidéo démultiplexées dans un format élémentaire.
